# EUROPEAN PATENT APPLICATION

(11) **EP 2 233 781 A1**
(43) Date of publication of application: **29.09.2010**
(21) Application number: 08862646.0
(22) Date of filing: 16.12.2008
(51) Int. Cl.: F16G 5/16

(54) **BELT ELEMENT AND TRANSMISSION BELT**

(30) Priority: 18.12.2007 JP 2007326592
(71) Applicant: Toyota Jidosha Kabushiki Kaisha, Toyota-shi, Aichi 471-8571 (JP)
(72) Inventor: KOBAYASHI, Daisuke, Toyota-shi Aichi 471-8571 (JP)
(74) Representative: TBK-Patent
(86) International application number: PCT/JP2008/072810
(87) International publication number: WO 2009/078392

(57) **Abstract**

To provide an element for a driving belt, which is easy for a ring to be fitted into a recess of the element, and which is capable of preventing deterioration of durability thereof.

An element E as a plate-like member comprises latch portions 8 and 9 formed on an opening end side of each inner side wall 5a and 6a of the recess 7 to hold a ring R in its inner circumferential side. The elements E thus structure are juxtaposed in a circular manner to be fastened by the ring R to form a driving belt V In the element E, a holding face 15 and 16 are formed on an inner circumferential face 8b and 9b of the latch portion 8 and 9 to be opposed to an outer circumferential face 13a and 14a of the ring R and to be contacted with the outer circumferential face of 13a and 14a the ring R to hold the ring R, and a relief area 19 and 20 are formed by depressing a portion of each of the inner side wall 5a and 6a at an inner circumferential side of the holding face 15 and 16.

## Description

### TECHNICAL FIELD

This invention relates to an element to be juxtaposed and fastened in a circular manner by an annular ring to form a driving belt, and to a driving belt using such elements.

### BACKGROUND ART

In the prior art, a geared transmission adapted to change a speed change ratio stepwise, and a continuously variable transmission capable of varying a speed change ratio steplessly are available as a transmission mechanism for transmitting power between rotary members. For example, a belt-type continuously variable transmission and a toroidal-type continuously variable transmission are known as the continuously variable transmission. Specifically, the belt-type continuously variable transmission is adapted to vary a speed change ratio continuously using a pair of drive pulleys and a pair of driven pulleys, and a driving belt applied to those pulleys. The known endless driving belt used in such belt-type continuously variable transmission is prepared by juxtaposing a plurality of plate members called an "element" or a "block" in a circular manner, and fastening the plate members by an annular metal belt called a "ring", "band" or a "carrier".

When the driving belt thus applied to the drive and driven pulleys is driven by driving the drive pulley, a frictional force acts on a contact portion between the element and the drive pulley, and a compressive force is applied to the elements in the arranging direction thereof, i.e., in the thickness direction thereof according to a torque of the drive pulley. The compressive force applied to the element being contacted with the drive pulley is transmitted to the element being contacted with the driven pulley via the elements situated linearly between the drive and driven pulleys. When the compressive force is transmitted to the element being contacted with the driven pulley, a frictional force is generated at the contact portion between the element and the driven pulley, and a torque to rotate the driven pulley is established according to the transmitted compressive force. The power is thus transmitted between the drive and driven pulley through the driving belt.

One example of the above-explained driving belt is disclosed in Japanese Patent Laid-Open No. 2000-249195. The "High-Loaded Transmission Belt" taught by Japanese Patent Laid-Open No. 2000-249195 is composed of a center belt and blocks reinforced against lateral pressure. Specifically, the "High-Loaded Transmission Belt" comprises a block (i.e., an element) which is so constituted that two belt sides having lock parts in its top end are connected to each other in their bottom ends by a connecting member, and two rows of endless carriers (i.e., rings) fixedly fitted into an engagement groove (i.e., a recess) opening between the lock parts. The belt side portion of the element is provided individually with a convex portion (i.e., a boss) and a concave portion (i.e., a hole) on each face so that the elements can be interlinked with one another. Therefore, the interlinked elements can be aligned even when the belt is running.

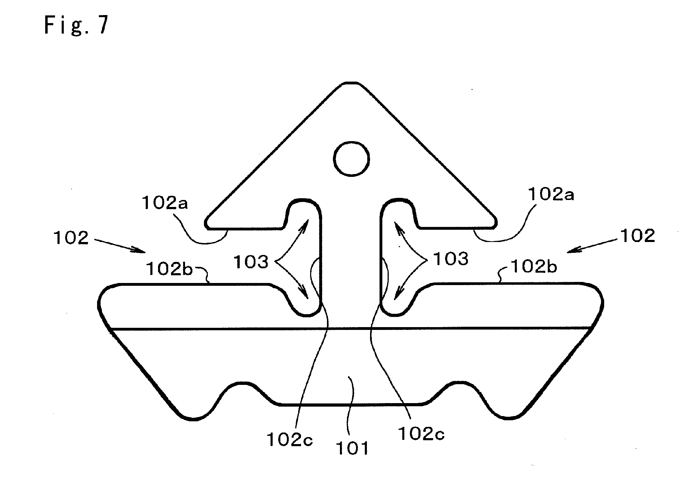

Meanwhile, Japanese Utility Model No. 63-33046 discloses a V-belt for a continuously variable transmission comprising: two rows of multilayered endless carriers (i.e., a ring); and a plurality of metal elements having slits for accommodating those rings on both sides; wherein a thickness of a ear (or top) portion of the element is thicker than a thickness of a shoulder portion (or a main body) on a pitch line (or a rocking edge). Fig. 7 of the present application is a view showing a structure of a conventional element as taught by Japanese Utility Model No. 63-33046. As shown in Fig. 7, the according to the element taught by Japanese Utility Model No. 63-33046, an element 101 comprises slits 102. In order to prevent interference between side edges of the ring and corners in the slit 102, a lower face 102a of the ear portion and an upper face 102b of the shoulder portion are depressed individually at a portion in the vicinity of a vertical inner face 102c to form relief areas 103.

According to the transmission belt taught by the aforementioned Japanese Patent Laid-Open No. 2000-249195, the lock parts are formed on both belt sides of the element erected beside the carriers to hold the carriers on the element, and the boss and the hole are formed individually on an upper corner of each face of the belt sides to interlink adjoining elements. That is, those boss and hole are formed symmetrically on both upper corner of the element. The carriers are individually fitted into each engagement groove and held by the lock part so that two rows of the belts are held in the element.

According to the transmission belt of Japanese Patent Laid-Open No. 2000-249195 thus structured, the carriers arranged parallel to each other have to be overlapped partially when fitted onto the elements or dismounted from the elements. That is, a total width of the carriers arranged parallel to each other have to be reduced narrower than the opening width between the lock parts of the element when the carriers are fitted onto the elements or dismounted from the elements, by twisting the carriers to overlap partially.

In order to twist the carriers being arranged parallel to each other thereby overlapping those carriers partially, it is necessary to swing the interlinked elements, that is, to pivot the elements relatively with each other. However, according to the element taught by Japanese Patent Laid-Open No. 2000-249195, the boss and the hole for interlinking adjoining elements are formed on both upper corners of the element. Accordingly, lateral movement of the element has to be restricted. This makes difficult to overlap the carriers arranged parallel to each other when assembling the transmission belt.

The element taught by Japanese Patent Laid-Open No. 2000-249195 having a recess opening to an outer circumferential side is generally called a "recessed element". In case of fitting the two rows of rings into inner circumferential spaces of lock the parts of the recess, outer side edges of the rings have to be contacted with the each corner between side walls of the recess and the inner faces of the lock parts, and each corner between the side walls of the recess and a bottom face (i.e., a saddle face) of the recess. As a result of such interference, those corners in the recess may be damaged by the edges of the rings and durability of the element is thereby degraded. In order to avoid such interference between the side edges of the rings and the corners in the recess, a relief area as taught by Japanese Utility Model No. 63-33046 has to be formed at each corner in the recess.

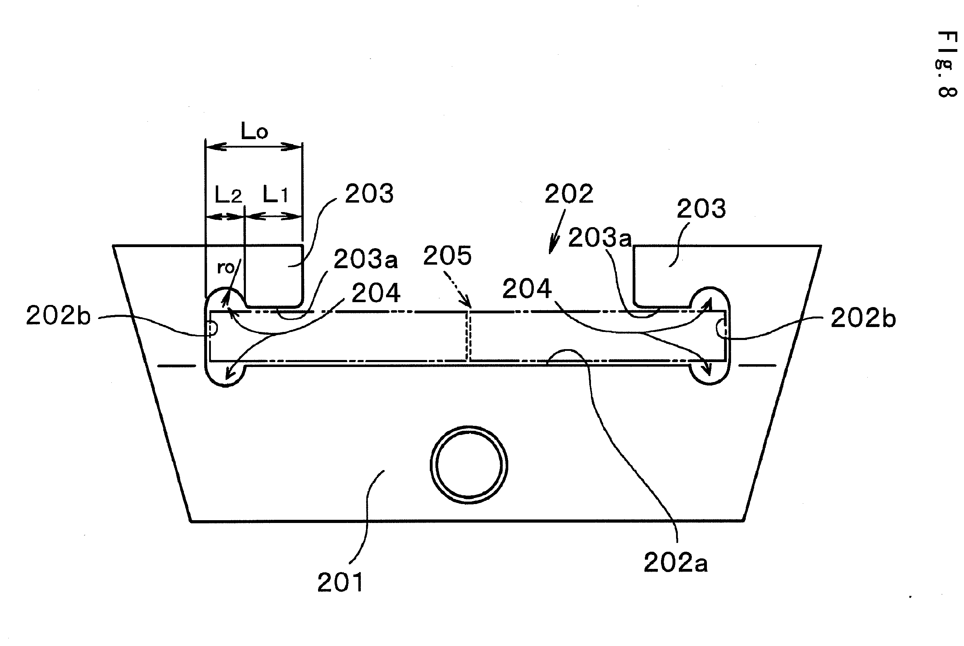

Fig. 8 of the present application is a view showing an example of applying the relief area taught by Japanese Utility Model No. 63-33046 to the corners in the recess of the conventional recessed element taught by Japanese Patent Laid-Open No. 2000-249195. The recessed element 201 shown in Fig. 8 comprises a recess 202. In order to avoid interference between outer side edges of the rings 205 and the corners in the recess 202, inner faces 203a of the lock part 203 are individually depressed at a portion in the vicinity of the side walls 202b of the recess 202, and both end portions of the bottom face (or saddle face) 202a are also depressed to form relief areas 204.

In the recessed element 201 thus structured, a protruding length L₀ of the lock part 203 is preferably shortened as short as possible to facilitate a fitting work of the rings 205 into the recess 202. However, the protruding length L₀ is a total of a minimum necessary length L₁ to ensure a contact area to be contacted with an outer face of the ring 205 and a width L₂ of the relief area 204 as expressed by the following formula: L₂ = 2 x R₀, where R₀ represents a radius of the rounded relief area 204. That is, the protruding length L₀ is inevitably elongated in the amount of the width L₂. Therefore, in case of forming relief areas at the corners in the recess of the recessed element, each lock part has to be elongated in the amount of the width of the relief area. This makes difficult to fit the rings into the recess of the element.

Thus, in order to avoid degradation of durability of the element resulting from such interference between the corners in the recess and the side edges of the rings, and in order to facilitate the fitting work of the rings into the recess, the conventional element is still required to be improved.

### DISCLOSURE OF THE INVENTION

The present invention has been conceived noting the technical problems thus far described. Therefore, an object of the present invention is to provide an element for a driving belt, which is easy for a ring to be fitted into a recess of the element, and which is capable of preventing degradation of durability thereof resulting from interferences between the corners in the recess and the side edges of the rings. In addition, another object of the present invention is to provide a driving belt using such elements.

In order to achieve the above-mentioned object, according to the present invention, there is provided an element for a driving belt having a recess, which holds an annular ring for fastening a plurality of the elements being juxtaposed in a manner to situate the recesses to open to an outer circumferential side to form a driving belt, and a latch portion, which is formed on an opening end side of each inner side wall of the recess to hold the ring in an inner circumferential side thereof, characterized by comprising: a holding face, which is formed on an inner circumferential face of the latch portion to be opposed to an outer circumferential face of the ring, and which is to be contacted with the outer circumferential face of the ring to hold the ring; and a relief area at a corner between the holding face and the inner side wall, which is formed by depressing each of the inner side wall of the recess inwardly at a portion radially inside of the holding face in a height direction of the element.

In addition, a curved face is formed on the holding face to protrude to an inner circumferential side from the holding face.

According to another aspect of the present invention, there is provided a driving belt, characterized by comprising: elements as claimed in claim 1 or 2 of the present invention being juxtaposed in a circular manner; and two rows of rings held parallel to each other in the recesses of the juxtaposed elements.

According to claim 1 of the present invention, the relief area is thus formed at the corner in the recess to prevent interference between the side edge of the ring and the corner in the recess. Specifically, the relief portion is formed by depressing the inner side wall of the recess at the portion of the inner circumferential side of the holding face in a height direction of the element. In other words, the relief portion is formed by depressing the inner side wall of the recess at the portion of the inner circumferential side of a base of the latch portion in a height direction of the element. This means that the relief portion will not be formed by depressing the holding face at a portion closer to a width center of the element than the inner side wall of the recess. Therefore, interference between the corner in the recess of the element and the side edge of the ring can be avoided so that the element can be prevented from being degraded in its durability. Moreover, the fitting work of the ring into the recess of the element can be facilitated by shortening the protruding length of the latch portion from the opening of the recess as short as possible.

As described, according to the element as claimed in claim 2 of the present invention, the curved face is formed on the holding face to protrude from the holding face. Therefore, in addition to the above-explained advantage achieved by the element as claimed in claim 1, the inner face of the latch portion, that is, the holding face can be prevented from being contacted with the outer circumferential face of the ring unevenly, or prevented from being contacted with the side edge of the ring sharply

As also described, according to claim 3 of the present invention, the driving belt is formed by fitting the two rows of the rings into the recesses of the juxtaposed elements as claimed in claim 1 or 2 thereby fastening the elements in a circular manner. Therefore, the rings can be fitted into the recess of the element easily, and the durability of the driving belt can be improved.

### BRIEF DESCRIPTION OF THE DRAWINGS

Fig. 1 is a front view schematically showing a structure of the element for a driving belt and a first example of a driving belt using the element of the present invention.
Fig. 2 is a side partial sectional view schematically showing a structure of the element for a driving belt according to the first example of the present invention.
Fig. 3 is a sectional view showing the element for a driving belt according to the first example in more detail.
Fig. 4 is a view schematically showing two rows of the rings arranged parallel to each other and overlapped partially.
Fig. 5 is a front view schematically showing a structure of the element according to the second example of the present invention.
Fig. 6 is a sectional view showing the element for a driving belt according to the second example in more detail.
Fig. 7 is a front view schematically showing a conventional element.
Fig. 8 is a front view of a recessed element to which a conventional relief area is applied.

### BEST MODE FOR CARRYING OUT THE INVENTION

### (First Example)

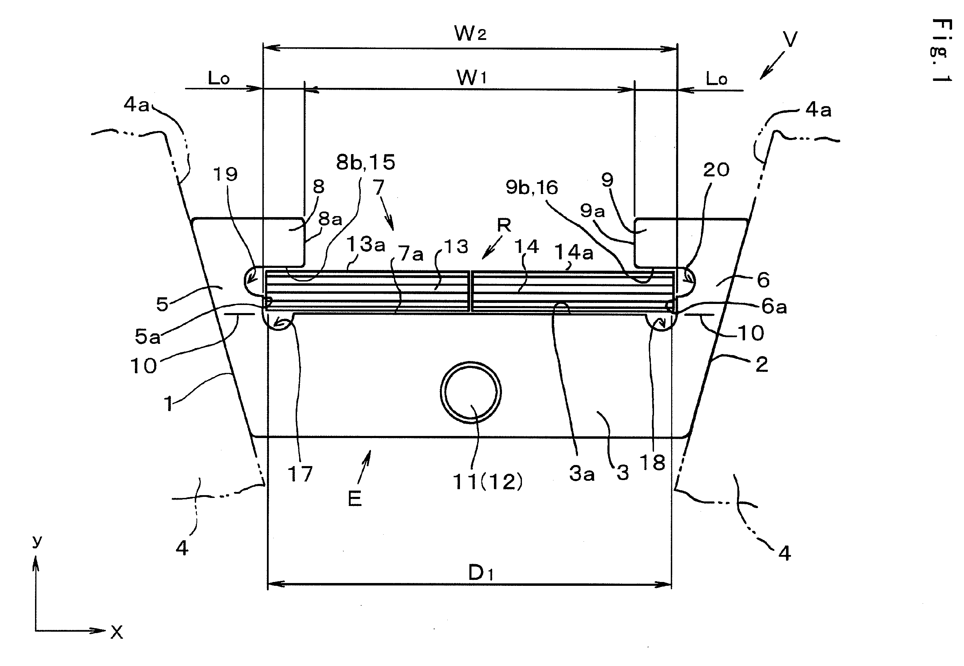

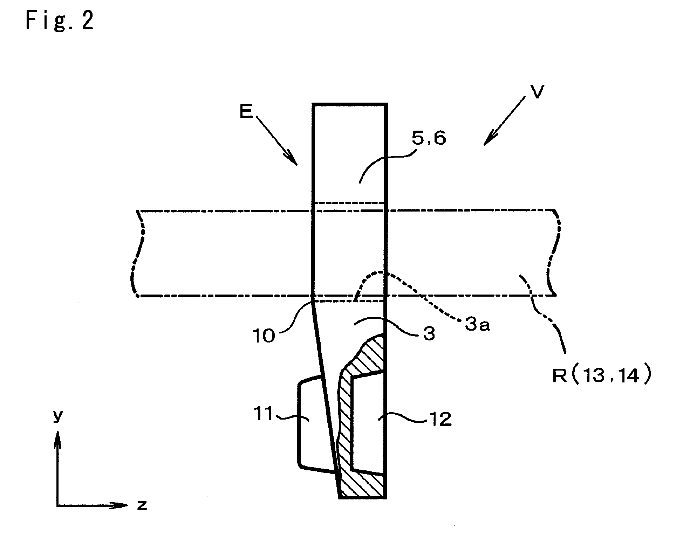

Next, this invention will be explained with reference to the accompanying drawings. First of all, a first example of the element for a driving belt and a driving belt using the element of the first example will be explained with reference to Figs. 1 to 3. A driving belt V shown in Figs. 1 and 2 is adapted to be applied to a drive pulley (i.e., an input shaft) and a driven pulley (i.e., an output shaft) of a belt-type continuously variable transmission to transmit a torque between those pulleys. The driving belt V shown therein comprises an annular ring R and a plurality of plate- like elements E.

The element E is a metal plate member comprising a base portion (or main body) 3. Both lateral faces 1 and 2 of the base portion 3, that is, both lateral ends (in the direction of x-axis in Fig. 1) of the base portion 3 are inclined. The inclined lateral faces 1 and 2 are frictionally contacted with a V-shaped groove 4a of a drive or driven pulley 4 of the belt type continuously variable transmission to transmit a torque.

The base portion 3 comprises columns 5 and 6 erected vertically (in the direction of y-axis in Figs. 1 and 2) at both lateral ends (in the direction of x-axis in Fig. 1) thereof. Accordingly, a recess 7 is formed by an upper face (or a top edge) 3a of the base portion 3 and both inner walls 5a and 6a of the columns 5 and 6 facing to the width center of the base portion 4. Thus, the recess 7 opens upwardly (in Fig. 1), in other words, the recess 7 opens toward an outer circumference of the driving belt V

Specifically, the recess 7 is a space for accommodating an endless ring R for fastening the elements E interlinked closely with one another in a circular manner. That is, the upper face 3a functions as a saddle face 4a onto which an inner circumferential face of the ring R is fitted.

The element E comprises latch portions 8 and 9. Specifically, the latch portion 8 is formed on an opening end of the inner wall 5a (i.e., on an outer circumferential end of the driving belt V), and the latch portion 9 is formed on an opening end of the inner wall 6a (i.e., on an outer circumferential end of the driving belt V). In other words, the latch portions 8 and 9 are formed to protrude toward a width center of the recess 7 from both upper ends of the columns 5 and 6. That is, a distance between an end face 8a of the latch portion 8 and an end face 9a of the latch portion 9 being opposed to each other is an opening width of the recess 7, and such distance between the end faces 8a and 9a is represented by W₁ in Fig. 1. On the other hand, a width W₂ of a bottom face 7a of the recess 7 (or the saddle face 3a), that is, a distance between the inner walls 5a and 6a is wider than the opening width W₁, as shown in Fig. 1.

The ring R is used to fasten the elements E to form the driving belt V For example, the ring R is a layered ring made of metal comprising a plurality of annular belt-like layers overlapped in a circumferential direction. Specifically, the ring R is split into two rings 13 and 14, and those rings 13 and 14 are arranged parallel to each other in the recess 7. Here, a configuration, dimensions, material, strength and so on of the rings 13 and 14 are identical to each other. As shown in Fig. 1, the rings 13 and 14 are designed to keep a width D₁ of the ring R (in the direction of x-axis in Fig. 1), that is, a total width of the rings 13 and 14 being situated parallel to each other wider than the opening width W₁ of the recess 7 of the element E, but narrower than the width W₂ of the bottom face 7a.

Therefore, the ring R in the recess 7 of the element E can be held by the latch portions 8 and 9 to be prevented from being detached from the recess 7. Specifically, an outer face 13a of the ring 13 deviating from the recess 7 is to be contacted with an inner face 8b of the latch portion 8, and an outer face 14a of the ring 14 deviating from the recess 7 is to be contacted with an inner face 9b of the latch portion 9. Thus, detachment of the ring R from the recess 7 can be prevented by the latch portions 8 and 9.

According to the first example of the present invention, the inner faces 8b and 9b of the latch portions 8 and 9 are individually formed into a flat surface being parallel to the bottom face 7a of the recess 7. Therefore, the inner faces 8b and 9b are individually contacted face-to face with the outer faces 13a and 14a of the rings 13 and 14. In other words, the inner faces 8b and 9b of the latch portions 8 and 9 are individually opposed to the outer faces 13a and 14a of the rings 13 and 14 held in the recess 7. Therefore, the outer faces 13a of the rings 13 deviating from the recess 7 is to be contacted face-to-face with an inner face 8b of the latch portion 8, and an outer face 14a of the ring 14 deviating from the recess 7 is to be contacted face-to-face with an inner face 9b of the latch portion 9. Thus, the inner faces 8b and 9b of the latch portions 8 and 9 function as the holding faces 15 and 16 of the present invention.

The elements E are juxtaposed in a circular manner and fastened by the ring R split into two rows of rings 13 and 14 to form a driving belt V The assembled driving belt V is applied to the drive and driven pulleys 4. In case the driving belt V is applied to the pulleys 4, clearances between the elements E are narrowed gradually toward a rotational center of the pulleys 4 in a region where the elements E are contacted with the pulleys 4, and the elements E are eventually contacted with one another at its portion close to the rotational center of the pulley 5. For this reason, a thickness of the element E has to be thinned at its lower portion, that is, at the portion close to the rotational center of the pulley 4, as illustrated in Fig. 2.

According to the example shown in Fig. 2, one of the faces of the base portion 3 i.e., the left face in Fig. 2 is thinned gradually from a predetermined portion below the saddle face 3a. In case the belt V is applied to the pulleys 4, the elements E are contacted with the adjoining element E at the portion where the thickness thereof is gradually reduced, in the region where the elements E are contacted with the pulley 4. In other words, an edge of a boundary at which the thickness of the element E is thus changed functions as a fulcrum to contact the adjoining elements E at its lower portion around the pulley 4. That is, such boundary of the thickness of the element E serves as a rocking edge 10.

A boss 11 and a hole 12 are respectively formed on each face of the base portion 3 being opposed to the adjoining element 1, at the width center of the element E. Specifically, as shown in Fig. 2, the boss 11 of circular truncated cone is formed on one of the faces of the base portion 3 where the rocking edge 10 is formed. On the other hand, the bottomed cylindrical hole 12 to which the adjoining boss 11 is inserted loosely is formed on a face opposite to the face on which the boss 11 is formed.

Therefore, a relative position of the juxtaposed elements E can be fixed in both vertical and horizontal directions in Fig. 1 by inserting the bosses 11 individually into the adjoining hole 12. For this reason, chattering of the driving belt V using the elements E applied to the pulleys is prevented so that the belt V can be driven stably and smoothly.

Since only one boss 11 and one hole 12 are respectively formed on each face of the element E at the width center of the element E, the elements E interlinked in a circular manner by inserting the bosses 11 individually into the adjoining hole 12 can swing relatively with each other, in other words, the interlinked elements 1 can pivot relatively with each other.

In order to prevent interference between the side edges of the ring R held in the recess 7 and the corners of the recess 7, relief areas 17, 18, 19 and 20 are formed on each corner in the recess 7.

Specifically, the relief area 17 is formed on the bottom face 7a of the recess 7 at one of the lateral ends of the inner wall 5a side, and the relief area 18 is formed on the bottom face 7a at the other lateral end of the inner wall 6a side. Meanwhile, the relief area 19 is formed on the inner wall 5a of the recess 7 at a portion of the holding face 15 side, and the relief area 20 is formed on the inner wall 6a of the recess 7 at a portion of the holding face 16 side.

More specifically, the relief area 17 is formed by making a dent in the bottom face 7a at one of the lateral ends of the inner wall 5a side, and the relief area 18 is formed by making a dent in the bottom face 7a at the other lateral ends of the inner wall 6a side. In other words, the relief area 17 is formed by depressing the lateral end of the bottom face 7a of the inner wall 5a side toward the base portion 3, and the relief area 18 is formed by depressing the lateral end of the bottom face 7a of the inner wall 6a side toward the base portion 3.

On the other hand, the relief area 19 is formed by making a dent in the inner wall 5a at a portion adjacent to the holding face 15, and the relief area 20 is formed by making a dent in the inner wall 6a at a portion adjacent to the holding face 16. In other words, the relief area 19 is formed by depressing the inner wall 5a at a portion adjacent to the holding face 15 toward the column 5, and the relief area 20 is formed by depressing the inner wall 6a at a portion adjacent to the holding face 16 toward the column 6.

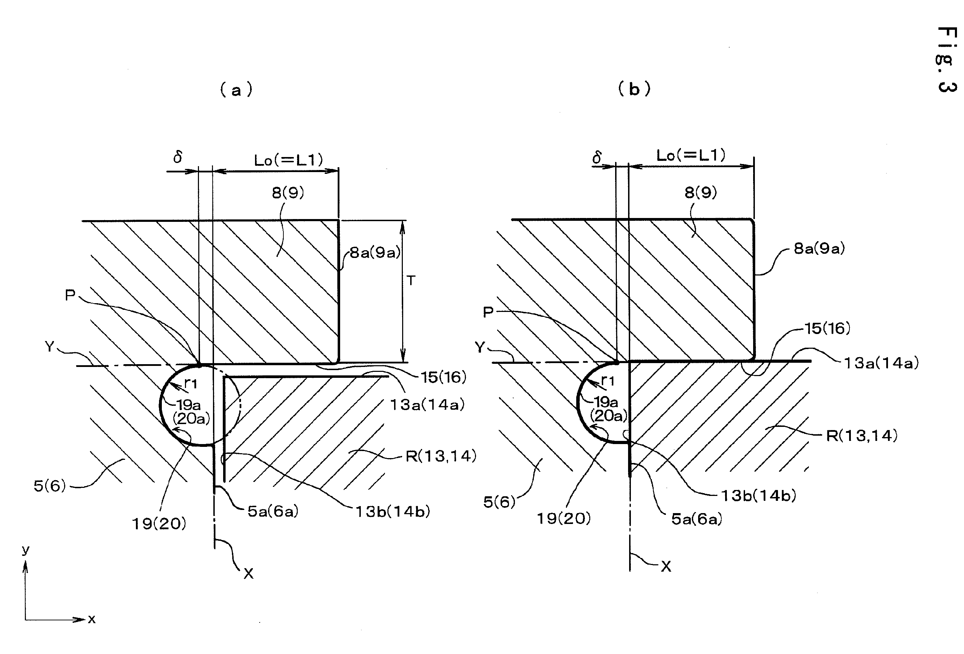

The relief areas 19 and 20 are thus formed by depressing the inner walls 5a and 6a. As shown in Fig. 3, a cross-sectional shape of each relief area 19 and 20 perpendicular to the thickness direction of the element E is an arcuate having a radius r₁. Specifically, the relief area 19 (or 20) is formed on the inner wall 5a (or 6a) radially inside (i.e., lower side in Fig. 3) of the level Y of the holding face 15 (or 16) in the height direction of the element E (i.e., in the direction of y-axis in Fig. 3), and to be depressed toward the column 5 (or 6) side, that is, toward the left side in Fig. 3 (in case of the relief area 19). In other words, the relief area 19 (or 20) is formed on the inner wall 5a (or 6a) to be situated on an inner circumferential side of the level Y of the holding face 15 (or 16), and to be depressed toward the column 5 (or 6) side. Accordingly, those relief areas 19 and 20 correspond to the relief area of the present invention.

In Fig. 3, P represents a contact point at which an upper end of a concave curve 19a (or 20a) of the relief area 19 (or 20) is contacted with the holding face 15 (or 16). As shown in Fig. 3, the contact point P is retracted in the width direction of the element E (i.e., in the direction of x-axis in Fig. 3) from a vertical line X toward the column 5 (or 6) in a distance δ, that is, toward the left side in Fig. 3 (in case of the relief area 19). Fig. 3 (b) is a view showing a situation where a side face 13b (or 14b) of the ring 13 (or 14) is contacted with the inner wall 5a (or 6a) of the recess 7, and the outer face 13a (or 14a) of the ring 13 (or 14) is contacted with the holding face 15 (or 16). However, according to the element E of the first example thus having the relief areas 19 and 20, interference between the side edge of the ring R and the corner of the element E can be avoided. Therefore, the element E can be prevented from being damaged by the side edge of the ring R so that the durability of the element E will not be degraded by such interference.

The above-mentioned level Y of the holding face 15 and 16 is determined to a level at which a required strength of the latch portions 8 and 9 to hold the ring R can be ensured, taking into consideration a configuration of the ring R to be fitted into the recess 7 and so on. Specifically, the level Y is set to a value which can shorten a height T of the latch portion 8 (or 9) to a minimum required value to ensure a required strength of the latch portions 8 and 9 to hold the ring R.

As described, if the protruding length L₀ of the latch portions 8 (or 9) is elongated more than necessary, that is, if a distance L₀ between the inner wall 5a (or 6a) and the end face 8a (or 9a) of the latch portion 8 (or 9) is elongated more than necessary, it becomes difficult for the ring R to be inserted into a space between the holding face 15 (or 16) and the bottom face 7a when fitted into the recess 7 of the element E. Therefore, in order to insert the ring R into the recess 7 of the element E smoothly, the aforementioned protruding length L₀ should be kept as short as possible.

To the contrary, if a contact area between the holding face 15 (or 16) of the latch portion 8 (or 9) and the outer face 13a (or 14a) of the ring 13 (or 14) is too small, that is, if the protruding length L₀ of the latch portion 8 (or 9) is too short, a stress is applied intensively to the width end of the outer face 13a (or 14a) of the ring 13 (or 14). As a result, durability of the ring R, that is, durability of the driving belt V is thereby degraded. Therefore, in order to ensure the durability of the driving belt V, the protruding length L₀ of the latch portion 8 (or 9) has to be longer than a minimum length L₁, which can maintain a predetermined contact area between the holding face 15 (or 16) and the outer face 13a (or 14a) sufficient to avoid such stress concentration on the width end of the outer face 13a (or 14a).

That is, the protruding length L₀ of the latch portion 8 (or 9) has to be kept longer than the minimum length L₁ but as short as possible. For this purpose, according to the element E of the present invention, the relief area 19 (or 20) is formed by depressing the inner wall 5a (or 6a) toward the column 5 (or 6) side, at the portion of inner circumferential side of the holding face 15 (or 16). Therefore, according to the present invention, the protruding length L₀ of the latch portion 8 (or 9) can be shorten as short as possible but longer than the minimum length L₁. As described, in case the recessed element 201of the comparative example shown in Fig. 8, the relief areas 204 are formed by depressing the inner face 203a of the lock part 203 and the width end of the bottom face 202a. That is, in comparison with the protruding length L₀ of the lock part 203 shown in Fig. 8, the protruding length L₀ of the latch portion 8 (or 9) of the element E can be shortened in the amount of the width L₂ (= 2 x r₀) of the relief area 19 (or 20). For this reason, the ring R can be fitted easily into the recess 7 of the element E, and the durability of the driving belt V using the element E can be improved.

The driving belt V is formed by fitting the ring R split into two rows of rings 13 and 14 into the recess 7 of the element E. Specifically, the driving belt V is assembled by inserting the rings 13 and 14 sequentially into the recess 7, that is, into the space between the holding face holding faces 15 and 16 and the bottom face 7a, thereby fastening the juxtaposed elements E in a circular manner.

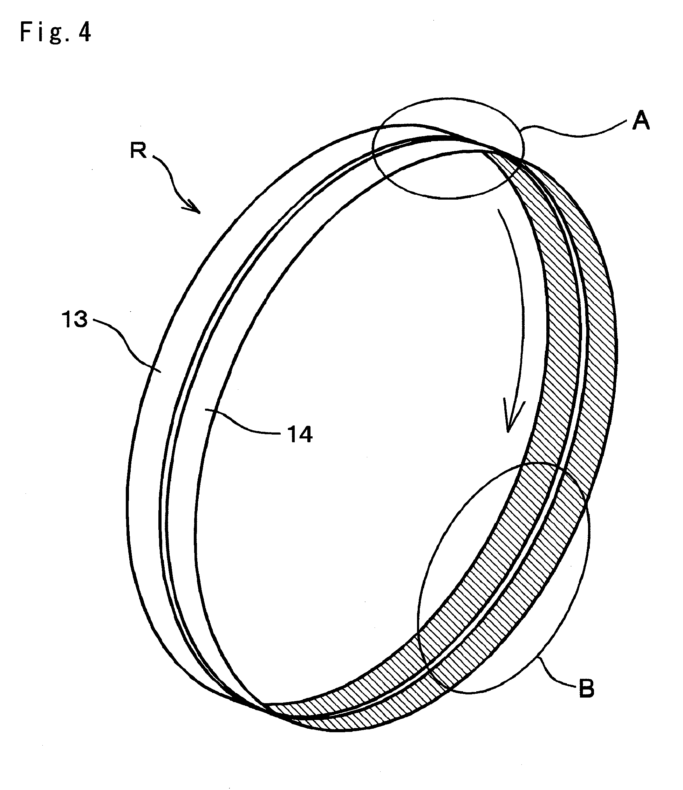

Here will be explained an assembling work of the driving belt V in more detail with reference to Fig. 4. First of all, the rings 13 and 14 of the ring R aligned parallel to each other are overlapped partially at a predetermined portion in the length direction thereof. As shown in Fig. 4, when the rings 13 and 14 are overlapped partially (as shown in the circle A), remaining portions of the rings 13 and 14 are kept parallel to each other (as shown in the circle B). A total width of the rings 13 and 14 at the portion thus overlapped partially is reduced narrower than the opening width W₁ of the element 1. Therefore, the ring R can be fitted into the recess 7 of the element E from the portion thus overlapped partially. Alternatively, the ring E can also be fitted into a plurality of the recesses 7 at the same time by juxtaposing predetermined pieces of the elements 1 in advance.

Then, the element(s) E holding the overlapped portion of the rings 13 and 14 in its recess(es) 7 is/are moved in the length direction of the ring R to the portion where the rings 13 and 14 are aligned parallel to each other. As described above, the total width D₁ of the rings 13 and 14 aligned parallel to each other is narrower than the width W₂ of the recess 7 of the element E but wider than the opening width W₁ of the element 1. Therefore, when the element E holding the overlapped portion of the rings 13 and 14 in the recess 7 is moved to the portion where the rings 13 and 14 are aligned parallel to each other, the rings 13 and 14 are held firmly in the recess 7 by the latch portions 8 and 9. As a result, the rings 13 and 14 are held properly in the recess 7 of the element E while being aligned parallel to each other.

The above-explained routine of fitting the ring R into the recess(es) 7 from the portion at which the rings 13 and 14 are overlapped partially, and moving the element(s) E to the portion at which the rings 13 and 14 are aligned parallel to each other is repeated sequentially.

At an initial phase of the fitting work of the ring R into the recess 7 of the element E, the rings 13 and 14 can be moved freely so that the rings 13 and 14 can be overlapped comparatively easily However, the movements of the rings 13 and 14 are to be restricted eventually with the increase of the number of the elements E being interlinked through the boss 11 and the hole 12 and holding the rings 13 and 14. Therefore, the rings 13 and 14 become difficult to be overlapped partially at the final phase of such fitting work. According to the invention, however, the rings 13 and 14 still can be twisted even at this stage by a pivotal movement of the element E being interlinked with one another and holding the ring R in the recess 7. Therefore, the rings 13 and 14 can be overlapped partially even at the final phase of the assembling work.

As explained, the width D₁ of the ring R, that is, the total width of the rings 13 and 14 aligned parallel to each other is narrower than the width W₂ of the recess 7 of the element E but wider than the opening width W₁ of the recess 7. Nonetheless, the width of the ring R can be reduced narrower than the opening width W₁ of the recess 7 by thus overlapping the rings 13 and 14 partially.

In other words, the element E is designed to have the opening width W₁ of the recess 7 thereof which is narrower than the width D₁ of the ring R, and the width W₂ of the recess 7 which is wider than the width D₁ of the ring R. Therefore, the ring R can be fitted into the recess 7 of the element E by overlapping the rings 13 and 14 partially, and inserting overlapped portion of the rings 13 and 14 into the recess 7 from the clearance between the end faces 8a and 9a of the latch portions 8 and 9.

After thus inserting the overlapped portion of the ring R into the recess 7 from the clearance between the end faces 8a and 9a, the element(s) E holding the overlapped portion of the rings 13 and 14 in its recess(es) 7 is/are moved to the portion where the rings 13 and 14 are aligned parallel to each other. Alternatively, the portion of the rings 13 and 14 overlapped and held in the recess 7 is returned to be parallel to each other. As a result, the ring R in the recess 7 can be held by the latch portions 8 and 9 to be prevented from being disengaged from the recess 7. Thus, the ring 7 can be fitted easily into the recess 7 of the element E and held certainly by the latch portions 8 and 9.

### (Second Example)

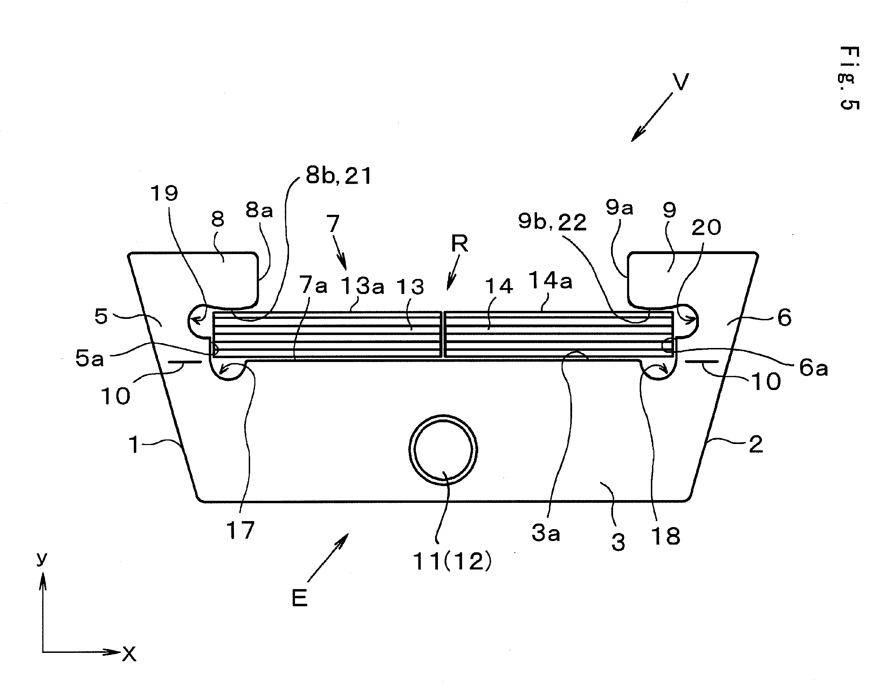

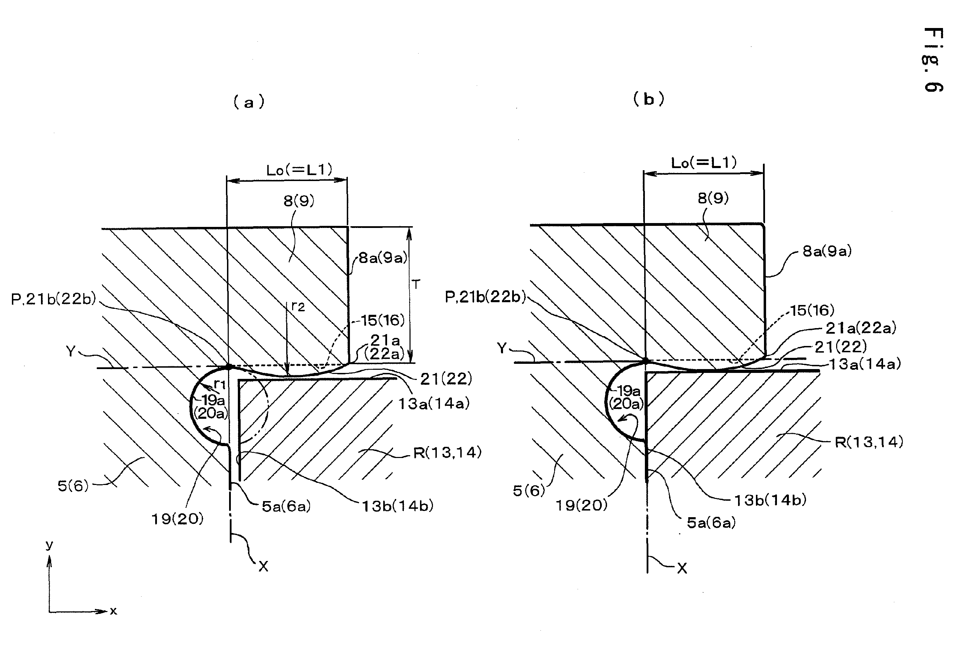

Next, here will be explained a second example of the element for a driving belt and the driving belt using such element with reference to Figs. 5 and 6. According to the second example of the present invention, a curved face protruding toward the inner circumferential side is formed on each holding face 15 and 16 of the element E of the first example. Therefore, a detailed explanation of the remaining structures in common with those of the first example will be omitted by allotting common reference numerals to Fig. 5 and 6.

As shown in Figs. 5 and 6, the element E of the second example comprises a curved face 21 formed on the inner face 8b of the latch portion 8, and a curved face 22 formed on the inner face 9b of the latch portion 9. Specifically, as shown in Fig. 6, a cross-sectional shape of each curved face 21 and 22 perpendicular to the thickness direction of the element E is an arcuate having a radius r₂, and the curved face 21 and 22 protrude toward the inner circumferential side (i.e., downwardly in Fig. 6) from the level Y at which the holding faces 15 and 16 are formed in element E of the first example.

One of the end portions of the curved face 21 (or 22), that is, an end portion 21a (or 22a) of the right side in Fig. 6 is connected with the end face 8a (or 9a). Meanwhile, the other end portion of the curved face 21 (or 22), that is, an end portion 21b (or 22b) of the column 5 (or 6) side (i.e., the left side in Fig. 6) is connected with the concave curve 19a (or 20a) of the relief area 19 (or 20).

Since the curved face 21 (or 22) is thus formed on the inner face 8b (or 9b) of the latch portion 8 (or 9), the outer face 13a (or 14a) of the ring 13 (or 14) will not be contacted with the inner face 8b (or 9b) of the latch portion 8 (or 9) unevenly even if the ring 13 (or 14) is twisted in its width direction (i.e., in the direction of x-axis in Figs. 5 and 6) by a pivotal movement of the elements E. In other words, the inner face 8b (or 9b) of the latch portion 8 (or 9) will not be contacted with the side edge of the ring 13 (or 14) even in the above-mentioned case.

According to the second example shown in Fig. 6, P represents a contact point P at which the concave curve 19a (or 20a) of the relief area 19 (or 20) is connected with the end portion 21b (or 22b) of the curved face 21 (or 22), and X represents a position of the inner wall 5a (or 6a) in the width direction of the element E. As shown in Fig. 6, a position of the contact point P in the width direction of the element E (i.e., in the direction of x-axis in Fig. 6) is substantially congruent with the position of the point X. Specifically, the contact point P is situated within an area not to protrude from the point X toward the width center of the element 7 (i.e., toward the right side in Fig. 6 in case of the relief area 19) to be substantially congruent with the point X in the width direction of the element E, and the concave curve 19a (or 20a) of the relief area 19 (or 20) is connected with the end portion 21b (or 22b) of the curved face 21 (or 22).

Fig. 6 (b) is a view showing a situation where the side face 13b (or 14b) of the ring 13 (or 14) is contacted with the inner face 5a (or 6a) of the recess 7, and the outer face 13a (or 14a) of the ring 13 (or 14) is contacted with the curved face 21 (or 22) of the latch portion 8 (or 9). However, according to the element E of the second example, interference between the side edge of the ring R and the corner of the element E can also be avoided as the element E according to the first example. Therefore, according to the second example, the element E can also be prevented from being damaged by the side edge of the ring R so that the durability of the element E will not be degraded by such interference.

Thus, according to the element E of the present invention and the driving belt V using the element E, the relief areas 17, 18, 19 and 20 are formed on each corner in the recess 7 of the element E to prevent the interference between the side edge of the ring R and the corner in the recess 7. Specifically, the relief area 19 is formed on the inner wall 5a at a portion adjacent to the holding face 15 or the inner face 8b of the latch portion 8, and the relief area 20 is formed on the inner wall 6a at a portion adjacent to the holding face 16 or the inner face 9b of the latch portion 9. That is, the relief area 19 (or 20) is formed by depressing the inner wall 5a (or 6a) toward the column 5 (or 6) at a portion of an inner circumferential side of the holding face 15 (or 16), i.e., at a portion lower than the holding face 15 (or 16) in the height direction of the element E. This means that the relief area 19 (or 20) will not be formed by depressing the holding face 15 (or 16) or the curved face 21 (or 22) at a portion closer to the width center of the element E than the inner wall 5a (or 6a).

Therefore, the interference between the side edge of the ring R and the corner in the recess 7 of the element E can be prevented so that the durability of the element E will not be degraded by such interference. Moreover, the ring E can be fitted into the recess 7 of the element E easily by shortening the protruding length L₀ of the latch portion 8 (or 9) as short as possible to widen the opening of the recess 7.

As described, according to another aspect of the present invention, the driving belt V is formed by the elements E thus structured and the ring R comprising the rings 13 and 14 arranged parallel to each other. Specifically, the driving belt V is formed by juxtaposing the plurality of the elements E, and by fitting the two rows of rings 13 and 14 into the recesses 7 of the elements 7 to be parallel to each other thereby fastening the juxtaposing elements 7 in a circular manner. Therefore, the driving belt can be assembled easily and the durability of the driving belt V can be improved.

The present invention should not be limited to the examples thus far explained. As described, the curved face is formed on the inner face of the latch portion functioning as the holding face to protrude toward the inner circumferential side from the holding face, and the cross-sectional shape of the curved face perpendicular to the thickness direction of the element is an arcuate. However, although not especially mentioned in the above-explained example, the cross-sectional shape of the curved face perpendicular to the width direction of the element may be rectangular or arcuate (in this case, a shape of the curved face would be a hemisphere protruding toward the inner circumferential side from the holding face).

In addition, although the example to apply the driving belt V using the element E of the present invention to the belt type continuously variable transmission has been explained, the driving belt V according to the present invention may also be applied to another kind of transmission mechanism composed mainly of a belt and pulleys.

## Claims

1. An element for a driving belt having a recess, which holds an annular ring for fastening a plurality of the elements being juxtaposed in a manner to situate the recesses to open to an outer circumferential side to form a driving belt, and a latch portion, which is formed on an opening end side of each inner side wall of the recess to hold the ring in an inner circumferential side thereof, **characterized by** comprising:
a holding face, which is formed on an inner circumferential face of the latch portion to be opposed to an outer circumferential face of the ring, and which is to be contacted with the outer circumferential face of the ring to hold the ring; and
a relief area at a corner between the holding face and the inner side wall, which is formed by depressing each of the inner side wall of the recess inwardly at a portion radially inside of the holding face in a height direction of the element.

2. The element for a driving belt as claimed in claim 1, further comprising:
a curved face, which is formed on the holding face to protrude to an inner circumferential side from the holding face.

3. A driving belt, comprising:
elements as claimed in claim 1 or 2 being juxtaposed in a circular manner; and
two rows of rings held parallel to each other in the recesses of the juxtaposed elements.
